(19) Europäisches Patentamt
European Patent Office
Office européen des brevets

(11) **EP 3 512 132 A1**

(12) **EUROPÄISCHE PATENTANMELDUNG**

(43) Veröffentlichungstag:
**17.07.2019  Patentblatt 2019/29**

(51) Int Cl.:
*H04J 3/06* (2006.01)        *H04Q 9/00* (2006.01)
*G01D 21/00* (2006.01)       *G06F 11/34* (2006.01)
*G06F 1/14* (2006.01)

(21) Anmeldenummer: **18151407.6**

(22) Anmeldetag: **12.01.2018**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**MA MD TN**

(71) Anmelder: **Siemens Aktiengesellschaft
80333 München (DE)**

(72) Erfinder: **Völksen, Gerd
80803 München (DE)**

(54) **VERFAHREN ZUR ZEITLICHEN SYNCHRONISATION VON DATENSENDERN GEGENÜBER EINEM DATENEMPFÄNGER IN EINEM DATENNETZWERK**

(57)    Die vorliegende Erfindung beschäftigt sich mit der zeitlichen Synchronisation von Datensendern gegenüber einem Datenempfänger in einem Datennetzwerk. Hierbei werden Zeitstempel von gesendeten Datenobjekten mit einer geschätzten Uhrengangverzögerung der Datensender relativ zu dem Datenempfänger korrigiert, wobei die Uhrengangverzögerung aus einem Minimum der zeitlichen Verzögerungen zwischen dem Datensender und dem Datenempfänger über die Folge von bereits gesendeten Datenobjekten geschätzt wird.

Die vorliegende Erfindung ist insbesondere für verteilte Systeme relevant, in denen kein aktiver Zugriff auf Datenquellen und somit keine aktive Synchronisation möglich ist. Die vorliegende Erfindung stellt ein heuristisches Verfahren bereit, mit Hilfe dessen eine virtuelle Synchronisation der Datenquellen am Empfänger erfolgt.

FIG 1

EP 3 512 132 A1

**Beschreibung**

Die vorliegende Erfindung betrifft ein Verfahren zur zeitlichen Synchronisation von Datensendern gegenüber einem Datenempfänger in einem Datennetzwerk.

Stand der Technik

In verteilten industriellen Systemen wie, etwa Internet-of-Things-basierten Anlagen, werden große Mengen von Event- und/oder Signal- bzw. Sensordaten generiert, transportiert und verarbeitet. Insbesondere wenn diese Daten aus verschiedenen Quellen stammen und korreliert werden sollen, wird ein Gleichgang der Uhren der Datenquellen mitunter als unabdingbar angesehen, damit Zeitstempel der Eventdaten in sinnvoller Weise miteinander verglichen werden können. Zeitstempel, die bei Eingang von einer verarbeitenden Einheit vergeben werden, sind im Allgemeinen nicht aussagekräftig, da die übertragenen Datenpakete verschiedenen Transferverzögerungen unterliegen und deshalb die Zeitpunkte des Entstehens verzerrt werden können. Eine sinnvollere Größe ist vielmehr der Zeitstempel zum Zeitpunkt der Erzeugung des jeweiligen Events. Als problematisch erweist es sich, wenn einzelne oder mehrere Uhren der Datenquellen vor- und/oder nachgehen. In einem konkreten Beispiel kann ein Temperaturfühler beispielsweise ein erstes Alarmsignal zu einem Zeitpunkt $t_1$ melden, während ein Rauchmelder zu einem Zeitpunkt $t_2$ ein zweites Alarmsignal aussendet. Um festzustellen, ob ein Feueralarm ausgelöst werden soll, ist hierbei auszuwerten, ob die beiden Alarmsignale in einem vorgegebenen Zeitfenster zusammenfallen (z.B. im Sekunden- und/oder Millisekundenbereich).

Eine mögliche Lösung hierfür ist eine aktive Synchronisation der Uhren der Datenquellen. Einer von vielen Ansätzen hierzu ist beispielsweise das Unix-Protokoll "Network Time Protocol" (NTP). Solche Synchronisationsprotokolle können bis in den Mikrosekundenbereich einen Gleichschlag von Uhren herbeiführen, sofern eine zeitkritische Synchronisation gewünscht ist. Oftmals können die verschiedenen Datenquellen jedoch nicht synchronisiert werden, da ein entsprechender schreibender Zugriff auf die lokale Systemuhr durch den Empfänger der Daten nicht erlaubt oder nicht möglich ist. Zudem haben mehrere asynchron laufende Datenempfänger zusätzlich ein Synchronisierungsproblem untereinander. Die Synchronisation eines großen und weitverteilten Systems mit mehreren verschiedenen Besitzern, die jeweils ihre eigenen Zeitläufe aufweisen, ist daher vielfach schwierig oder überhaupt nicht möglich.

Zusammenfassung der Erfindung

Vor diesem Hintergrund liegt der vorliegenden Erfindung die Aufgabe zugrunde, Lösungen für eine Synchronisation von Datenquellen in Datennetzwerken bereitzustellen, welche ohne einen aktiven Zugriff auf die Datenquellen auskommen.

Erfindungsgemäß wird diese Aufgabe gelöst durch ein Verfahren mit den Merkmalen des Patentanspruchs 1.

Demgemäß ist ein Verfahren zur zeitlichen Synchronisation von Datensendern gegenüber einem Datenempfänger in einem Datennetzwerk vorgesehen. Das Verfahren umfasst das Senden einer Folge von Datenobjekten i = 1 bis N mit N > 1 mit einem Datensender, wobei für jedes Datenobjekt ein lokaler Senderzeitstempel $T_{S,i}$ des Datensenders zum Zeitpunkt des Sendens vergeben wird; Empfangen der Folge von Datenobjekten mit einem Datenempfänger, wobei für jedes Datenobjekt ein lokaler Empfängerzeitstempel $T_{E,i}$ des Datenempfängers zum Zeitpunkt des Empfangens vergeben wird; Bestimmen eines Minimums $m_N$ einer zeitlichen Verzögerung $\Delta T_i = T_{E,i} - T_{S,i}$ zwischen dem Datensender und dem Datenempfänger über die Folge von Datenobjekten; und Zuweisen eines korrigierten Zeitstempels $T_{SK,i} = T_{S,i} + \Delta TU$ zu dem zuletzt empfangenen Datenobjekt, wobei $\Delta TU$ eine geschätzte Uhrengangverzögerung des Datensenders relativ zu dem Datenempfänger ist, wobei $\Delta TU$ aus der Folge von Datenobjekten mit $\Delta TU < m_N$ geschätzt wird.

Weiterhin ist ein Datennetzwerk mit Datensendern vorgesehen, wobei die Datensender in Datenverbindung mit einem Datenempfänger stehen, wobei der Datenempfänger dazu ausgebildet ist, die Datensender mit einem erfindungsgemäßen Verfahren zeitlich gegenüber dem Datenempfänger zu synchronisieren.

Eine der vorliegenden Erfindung zugrunde liegende Idee besteht darin, eine aktive Synchronisation von Datenquellen in Datennetzwerken zu vermeiden, indem die lokalen Zeitstempel der Datenquellen lediglich auf Basis eines heuristischen Verfahrens mittels einer geschätzten Uhrengangverzögerung korrigiert werden. Eine Korrektur der Zeitstempel ist hierbei auch ohne einen schreibenden Zugriff auf die Datenquellen jederzeit möglich.

Beispielsweise kann in einem Netzwerk jeder Empfänger von Eventdaten eine Liste seiner Datenlieferanten bzw. Datenquellen mit der jeweiligen Uhrengangverzögerung relativ zu der Eigenzeit des Empfängers erstellen und verwalten. Wenn bekannt ist, dass beispielsweise die Uhr einer Datenquelle 30 Sekunden vorgeht, kann der Zeitstempel eines Datenobjekts um diesen Betrag erhöht werden, um eine etwaige Gleichzeitigkeit in der Berechnung von Bedingungen zu erhalten. Die einzige Voraussetzung dazu ist, dass jedes Eventdatenobjekt einen Zeitstempel $T_{S,i}$ seiner Entstehung von seiner Quelle bekommt und zudem einen weiteren Zeitstempel von der empfangenden Einheit $T_{E,i}$. Des Weiteren wird angenommen, dass relativistische Effekte, hervorgerufen beispielsweise durch sehr hohe Geschwindigkeiten oder starke Gravitationsfelder, vernachlässigt werden können. Somit kann ein Verzögerung für jedes Datenobjekt berechnet werden: $\Delta T_i = T_{E,i} - T_{S,i}$. Ist $\Delta T_i$ negativ, d.h. der Empfang läge vor dem Absenden, so kann bereits von einem Problem mit dem Uhrengang bei Sender und Empfänger ausgegangen werden. Jedoch muss auch bei positivem $\Delta T_i$ keine Gleichtaktung der Uhren vorliegen.

Zur Bestimmung eines Gangunterschieds zwischen Sender und Empfänger kann jedes $\Delta T_i$ in zwei Anteile zerlegt werden, nämlich eine Transferdauer $\Delta T_{D,i}$ und eine Uhrengangverzögerung $\Delta T_{U,i}$, sodass $\Delta T_i = \Delta T_{D,i} + \Delta T_{U,i}$ bzw. $\Delta T_{U,i} = \Delta T_i - \Delta T_{D,i}$ gilt. Dabei kann sich die Transferdauer $\Delta T_{D,i}$ je nach Netzwerkbelastung dynamisch ändern, während die Uhrengangverzögerung $\Delta T_{U,i}$ häufig annähernd konstant bleibt. Ist $\Delta T_{U,i}$ bekannt, so kann der Zeitstempel $T_{S,i}$ eines Events vom Zeitpunkt seiner Entstehung, vergeben durch die Datenquelle, durch einen aktualisierten Zeitstempel $T_{SK,i} = T_{S,i} + \Delta T_{U,i}$ ersetzt werden. Die Herausforderung ist jedoch die Berechnung der Uhrengangverzögerung $\Delta T_{U,i}$, da weder die Transferdauer noch die Uhrengangverzögerung direkt aus einem $\Delta T_i$ abgeleitet werden können.

In der vorliegenden Erfindung wird zur Abschätzung der Uhrengangverzögerung hierzu eine Folge von solchen Abweichungen betrachtet. Um für eine Quelle von Eventdaten die Uhrengangverzögerung $\Delta T_{U,i}$ abzuschätzen, wird mit Statistiken über eine Reihe von Eventdatenobjekten gearbeitet. Für ein einziges Objekt ist eine sinnvolle Zerlegung $\Delta T_i = \Delta T_{D,i} + \Delta T_{U,i}$ nicht möglich. Sei also eine Folge von Eventdaten mit jeweils einem Zeitstempel eines Senders und eines Empfängers gegeben, so ist die Folge der $\Delta T_i$ mit i = 1,...,N und N > 1 zu betrachten. Es wird davon ausgegangen, dass die Transferdauer $\Delta T_{D,i}$ positiv und daher die Uhrengangverzögerung immer kleiner als das Minimum der $\Delta T_i$ ist: $\Delta TU < m_N = \min\{\Delta T_i \mid i = 1,...,N\}$. Die Größe der Folgen N ist hier nicht als eine Konstante zu sehen, sondern als ein Parameter zu Berechnung des Minimums $m_N$. Sobald ein weiteres $\Delta T_i$ hinzukommt, kann $m_N$ gegebenenfalls nach unten korrigiert und $\Delta TU$ entsprechend angepasst werden.

Mit dem dargestellten Ansatz kann eine weitere höhere Qualität der Verarbeitung von Eventdaten in Internet-of-Thingsbasierten Anlagen erzielt werden. Wo bisher aufgrund von Gangunterschieden keine oder falsche Ergebnisse berechnet wurden, kann nun eine wesentlich verbesserte Vergleichbarkeit von Zeitstempeln von Eventdatenpaketen und mithin der Ereignisse, die sie beschreiben, erreicht werden. Ein Zugriff auf die Uhren der Komponenten des Systems ist - selbst wenn möglich - nicht mehr notwendig.

Vorteilhafte Ausgestaltungen und Weiterbildungen ergeben sich aus den weiteren Unteransprüchen sowie aus der Beschreibung unter Bezugnahme auf die Figuren.

Gemäß einer Weiterbildung kann $m_N - T_D$ zur Schätzung von $\Delta TU$ verwendet werden. Hierbei kann $T_D$ eine geschätzte minimale Transferdauer der Datenobjekte von dem Datensender zu dem Datenempfänger sein. Es wird somit abgeschätzt, wie hoch die Transferdauer mindestens sein dürfte, um derart eine sinnvolle Schätzung der Uhrengangverzögerung zu erhalten. Hierzu ist eine genaue Kenntnis des Datennetzwerks bzw. Datennetzes hinsichtlich Topologie, verwendeter Technologie, zugrundeliegender Protokolle etc. hilfreich.

Gemäß einer Weiterbildung kann $T_D = (h + 1) * T_h$ sein, wobei $T_h$ eine geschätzte minimale Transferdauer der Datenobjekte zwischen zwei Netzknoten des Datennetzwerks und h eine Anzahl der von den Datenobjekten von dem Datensender zu dem Datenempfänger durchlaufenen Netzknoten ist. Bei h kann es sich insbesondere um die Hop-Anzahl (englisch: "hop count") handeln, d.h. die Anzahl der Netzknoten wie Router, Repeater, Switches und/oder dergleichen, welche auf dem Weg zwischen Sender und Empfänger liegen. Auch in diesem Fall sind somit detaillierte Kenntnisse des Datennetzwerks essentiell.

Gemäß einer Weiterbildung kann $P*m_N$ zur Schätzung von $\Delta TU$ verwendet werden. P kann ein geschätzter prozentualer Anteil der Transferdauer mit $0 < P \leq 1$ sein. Beispielsweise kann P = 0,8 sein, d.h. 80% der Transferdauer.

Gemäß einer Weiterbildung kann $m_N - P*(\overline{\Delta T}_N - m_N)$ zur Schätzung von $\Delta TU$ verwendet werden. Hierbei kann $\overline{\Delta T}_N$ ein arithmetisches Mittel der $\Delta T_i$ sein. Das arithmetische Mittel $\overline{\Delta T}_N$ kann in der üblichen Weise gemäß

$$\overline{\Delta T}_N = 1/N \sum_{i=1}^{N} \Delta Ti$$

berechnet werden. Weiterhin kann beispielsweise P = 1,0 gelten. Prinzipiell sind jedoch ebenso andere Werte zwischen 0 und 1 vorgesehen, z.B. 0,8. Hierbei wird sukzessive eine Abschätzung der Transferdauer über die Folge der Datenobjekte erstellt, d.h. in Abhängigkeit von der Anzahl der Datenobjekte N. Man nimmt hierbei an, dass die Differenz zwischen diesem Mittelwert und dem Minimum der $\Delta T_i$ in etwa der Transferdauer entspricht. Prinzipiell können alternativ oder zusätzlich andere Mittelwerte berücksichtigt werden, z.B. geometrisches Mittel, harmonisches Mittel, quadratisches Mittel usw.

Gemäß einer Weiterbildung kann $\overline{\Delta T}_N$ ein gewichtetes arithmetisches Mittel der $\Delta T_i$ sein. Hierbei können beispielsweise reelle Gewichte $W_i$ verwendet werden, wobei das gewichtete arithmetische Mittel berechnet wird als

$$\overline{\Delta T}_N = \frac{1}{\sum W_i} \sum_{i=1}^{N} W_i \cdot \Delta Ti.$$

Beispielsweise können zum Beginn einer Folge von Datenobjekten kleine Gewichte verwendet werden, sodass vornehmend später folgende Datenobjekte berücksichtigt werden. Weiterhin kann beispielsweise P = 1,0 gelten. Prinzipiell sind jedoch ebenso andere Werte zwischen 0 und 1 vorgesehen, z.B. 0,8. Prinzipiell können alternativ oder zusätzlich andere gewichtete Mittelwerte berücksichtigt werden, z.B. geometrisches Mittel, harmonisches Mittel, quadratisches Mittel usw.

Gemäß einer Weiterbildung kann $m_N - P*(M_N - m_N)/2$ zur Schätzung von $\Delta TU$ verwendet werden. Hier-

bei kann $M_N$ ein Maximum der $\Delta T_i$ sein.

Gemäß einer Weiterbildung kann lediglich eine Anzahl k der zuletzt empfangenen Datenobjekte N bis N - k - 1 zur Abschätzung von $\Delta TU$ verwendet werden. Beispielsweise kann im Falle eines Startvorgangs einer Anlage oder einer Maschine, welche die Datenobjekte aussendet, lediglich auf Datenobjekte nach Ablauf des Startvorgangs zurückgegriffen werden.

Gemäß einer Weiterbildung können lediglich Datenobjekte in einem bestimmten Zeitfenster in Abhängigkeit von einer vorgegebenen Zeitgenauigkeit berücksichtigt werden. Dies kann insbesondere in Fällen nützlich sein, bei denen sich nicht nur die Transferdauer $\Delta T_{D,i}$ dynamisch ändert, sondern auch die Uhrengangverzögerung $\Delta T_{U,i}$ deutlichen Schwankungen unterliegt. Beispielsweise können Uhren in unterschiedlichen Datenquellen zeitversetzt jedoch in gleicher Taktung laufen. Dies hat zur Folge, dass Gangunterschiede zwischen Sender und Empfänger konstant sind. Wenn jedoch Uhren unterschiedlich getaktet sind, dann ändert sich der Gangunterschied mit der Zeit und ist nicht mehr konstant. Ein Indikator hierfür kann beispielsweise sein, wenn eine der Größen $\overline{\Delta T}_N$, $m_N$ oder $M_N$ merklich ansteigt oder fällt, oder eine der daraus berechneten Größen entsprechende Änderungen zeigt, etwa wenn $(M_N - m_N)$ steigt. Eine mögliche Lösung für eine derartige Konstellation ist es, lediglich die letzten relevanten Datenobjekte zu verwenden, das heißt, die obigen Berechnungen auf ein sogenanntes "Sliding Window" zu reduzieren, das zum aktuellen Zeitpunkt endet. Es können somit alle Daten erfasst und berechnet werden, die innerhalb eines gegebenen Zeitfensters empfangen werden. Hierbei kann der Beginn des Zeitfensters so gewählt werden, dass eine ausreichende Datenmenge, jedoch nicht mehr als notwendig, berücksichtigt wird. Liegt die Abweichung der Größe beispielsweise im Bereich einer Sekunde pro Stunde und liegt die geforderte Zeitgenauigkeit im Bereich von einer Zehntelsekunde, so sollte das Fenster signifikant kleiner als sechs Minuten sein, da innerhalb von sechs Minuten eine Abweichung von einer Sekunde erreicht wird. Beispielsweise kann das Zeitfenster zu $\Delta t = \varepsilon/2a$ festgelegt werden, wobei $\varepsilon$ die geforderte Zeitgenauigkeit und a die zeitliche Änderung der entsprechenden Größe darstellt, z.B. von $\overline{\Delta T}_N$. Der Faktor 1/2 stellt hierbei sicher, dass das Sliding Window wirklich signifikant kleiner als die Abweichung der vor- oder nachgehenden Uhr ist.

Gemäß einer Weiterbildung kann der Datenempfänger korrigierte Zeitstempel $T_{SK,i}$ für eine Mehrzahl von Datensendern auf Basis von entsprechenden geschätzten Uhrengangverzögerungen $\Delta TU$ erstellen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand der in den schematischen Figuren angegebenen Ausführungsbeispiele näher erläutert. Es zeigen dabei:

Fig. 1      schematische Ansicht eines Datennetzwerks gemäß einer Ausführungsform der Erfindung;

Fig. 2      schematisches Ablaufdiagramm eines Verfahrens zur zeitlichen Synchronisation von Datensendern gegenüber einem Datenempfänger in dem Datennetzwerk aus Fig. 1; und

Fig. 3      beispielhafte Folge von zeitlichen Verzögerungen zwischen den Datensendern und dem Datenempfänger in Fig. 1.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

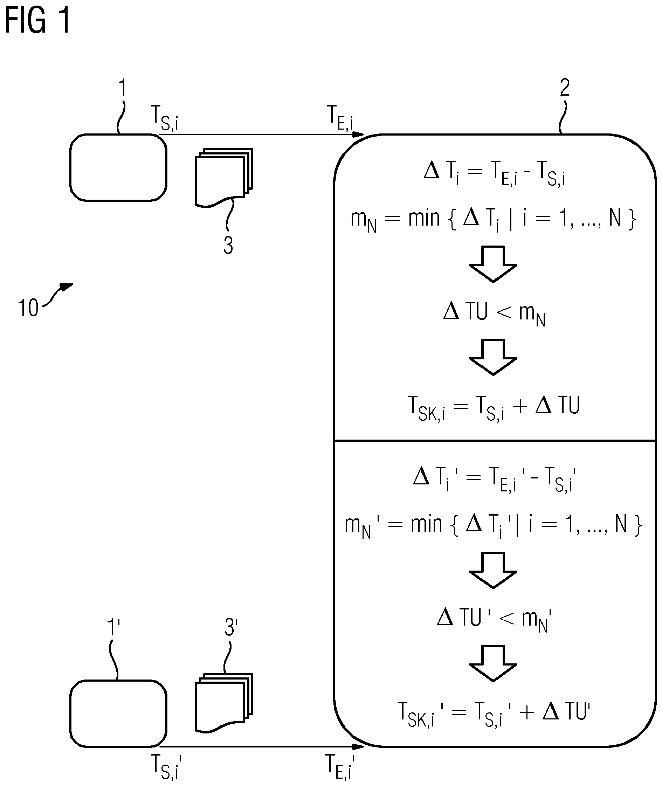

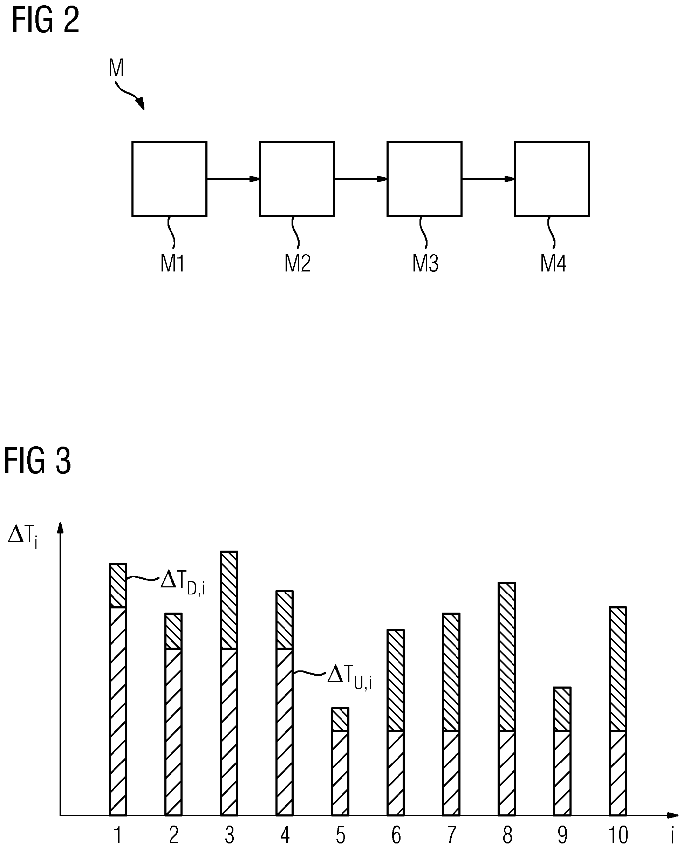

Figur 1 zeigt eine schematische Ansicht eines Datennetzwerks 10 gemäß einer Ausführungsform der Erfindung. Das Datennetzwerk 10 kann beispielsweise ein verteiltes System sein, in welchem unterschiedliche Datenquellen und Datenempfänger miteinander kommunikativ verbunden sind. Das Datennetzwerk 10 in Fig.1 umfasst beispielhaft zwei Datensender 1, 1', welche in Datenverbindung mit einem Datenempfänger 2 stehen. Die Datensender 1, 1' senden hierzu Datenobjekte 3, 3' in zeitlichen Abständen an den Datenempfänger 2. Für jedes Datenobjekt 3, 3' wird ein lokaler Senderzeitstempel $T_{S,i}$, $T_{S,i}'$ des jeweiligen Datensenders 1, 1' zum Zeitpunkt des Sendens vergeben. Sobald das jeweilige Datenobjekt 3, 3' beim Datenempfänger 2 eintrifft, wird für jedes Datenobjekt 3, 3' ein lokaler Empfängerzeitstempel $T_{E,i}$, $T_{E,i}'$ des Datenempfängers 2 zum Zeitpunkt des Empfangens vergeben. Um die Zeitstempel der Datensender 1, 1' sinnvoll miteinander in Beziehung setzen zu können, werden diese mit einem Verfahren M gemäß Fig. 2 zeitlich gegenüber dem Datenempfänger 2 synchronisiert.

Das Verfahren M umfasst hierzu unter M1 für jeden Datensender 3, 3' Senden einer Folge von Datenobjekten 3, 3' i = 1 bis N mit N > 1 und unter M2 Empfangen der jeweiligen Folge von Datenobjekten 3, 3' mit dem Datenempfänger 2. Das Verfahren M umfasst unter M3 ferner Bestimmen eines Minimums $m_N$ einer zeitlichen Verzögerung $\Delta T_i$, $\Delta T_i'$ zwischen dem jeweiligen Datensender 1, 1' und dem Datenempfänger 2 über die Folge von Datenobjekten 3, 3', wobei $\Delta T_i = T_{E,i} - T_{S,i}$ bzw. $\Delta T_i' = T_{E,i}' - T_{S,i}'$ ist. Eine exemplarische Folge der zeitlichen Verzögerungen $\Delta T_i$ der Datenobjekte 3 für den oberen Sender 1 in Fig. 1 findet sich in Fig. 3. Hierbei sind die zeitlichen Verzögerungen $\Delta T_i$ von zehn beispielhaften Datenobjekten 3 hintereinander aufgetragen. Jede zeitliche Verzögerung $\Delta T_i$ wird in zwei Anteile unterteilt: einer Transferdauer $\Delta T_{D,i}$ und einer Uhrengangverzögerung $\Delta T_{U,i}$. Grundsätzlich können sowohl die Transferdauer $\Delta T_{D,i}$ als auch die Uhrengangverzögerung $\Delta T_{U,i}$ einer zeitlichen Schwankung unterworfen sein. In typischen Anwendungen kommt es jedoch vor, dass insbesondere die Uhrengangverzögerung $\Delta T_{U,i}$ näherungsweise zeitlich konstant ist. In der beispielhaften Darstellung in Fig. 3 unterliegt die Transferdauer $\Delta T_{D,i}$ deutlichen Veränderungen, während sich die Uhrengangverzögerung $\Delta T_{U,i}$ ab einem bestimmten Zeitpunkt (ab Datenpaket 5) nicht mehr ändert. Die konkrete Aufteilung der zeitlichen Verzögerung $\Delta T_i$ in die beiden Anteile $\Delta T_{D,i}$ und $\Delta T_{U,i}$ ist a priori nicht ohne weiteres möglich. Andererseits können die Zeitstempel der Sender 1, 1' ohne eine aktive Synchronisation der Sender 1, 1' nur dann in eine sinnvolle Beziehung miteinander gebracht werden, wenn die zeitliceen Verzögerungen $\Delta T_i$ bekannt sind und/oder zumindest abgeschätzt werden können. Die vorliegende Lösung verfolgt hierzu nun einen heuristischen Ansatz, indem zunächst unter M3 das jeweilige Minimum $m_N$ bzw. $m_N'$ der zeitlichen Verzögerungen $\Delta T_i$, $\Delta T_i'$ für jeden Sender 1, 1' bestimmt wird, wobei $m_N = \min\{\Delta T_i \mid i = 1,...,N\}$ bzw. $m_N' = \min\{\Delta T_i' \mid i = 1,...,N\}$ gilt.

Das Verfahren umfasst unter M4 ferner Zuweisen eines korrigierten Zeitstempels $T_{SK,i} = T_{S,i} + \Delta TU$ bzw. $T_{SK,i}' = T_{S,i}' + \Delta TU'$ zu dem zuletzt empfangenen Datenobjekt 3, 3'. $\Delta TU$ bzw. $\Delta TU'$ ist hierbei eine geschätzte Uhrengangverzögerung des jeweiligen Datensenders 1, 1' relativ zu dem Datenempfänger 2, welche aus der Folge von Datenobjekten 3, 3' mit $\Delta TU < m_N$ bzw. $\Delta TU' < m_N'$ geschätzt wird. Dies bietet den unmittelbaren Vorteil, dass kein aktiver bzw. schreibender Zugriff auf die Datensender 1, 1' notwendig ist. Vielmehr reicht es aus, lediglich die Senderzeitstempel $T_{S,i}$, $T_{S,i'}$ und die Empfängerzeitstempel $T_{E,i}$, $T_{E,i}'$ bzw. deren zeitliche Verzögerungen $\Delta T_i$, $\Delta T_i'$ sowie die auf deren Basis korrigierten Zeitstempel $T_{SK,i}$, $T_{SK,i}'$ an dem Empfänger zu verwalten. Hierdurch wird gewissermaßen eine virtuelle Synchronisation der Datensender mittels einer Schätzung der Uhrengangverzögerung bereitgestellt. Dies kann an dem Beispiel in Fig. 3 nachvollzogen werden. Immer wenn die $\Delta T_i$ minimal sind, d.h. bei den Datenobjekten 2 und 5, wird die Uhrengangverzögerung $\Delta TU$ neu nach unten hin abgeschätzt.

Für die Bestimmung der geschätzten Uhrengangverzögerungen $\Delta TU$, $\Delta TU'$ können hierbei mehrere Ansätze herangezogen werden. Grundsätzlich ist dabei abzuschätzen, wie viel die Transferdauer $\Delta T_{D,i}$, $\Delta T_{D,i}'$

mindestens beträgt (vgl. Fig. 3). Hierzu bieten sich unterschiedliche Größen an. Beispielsweise kann bei detaillierter Kenntnis der Netzwerkstruktur eine minimale Transferdauer $T_D$ der Datenobjekte 3 von dem Datensender 1 zu dem Datenempfänger 2 geschätzt werden und die Uhrengangverzögerungen $\Delta TU$, $\Delta TU'$ über $\Delta TU = m_N - T_D$ bzw. $\Delta TU' = m_N' - T_D'$ abgeschätzt werden. $T_D$ kann hierbei beispielsweise zu $T_D = (h + 1) * T_h$ bestimmt werden, wobei $T_h$ eine geschätzte minimale Transferdauer der Datenobjekte 3 zwischen zwei Netzknoten des Datennetzwerks 10 und h eine Anzahl der von den Datenobjekten 3 von dem Datensender 1 zu dem Datenempfänger 2 durchlaufenen Netzknoten ist (englisch: "hop count"). Andererseits kann diese Information ebenso über einen geschätzten prozentualen Anteil der Transferdauer (d.h. mit einem Proportionalitätsfaktor P mit $0 < P \leq 1$) über $\Delta TU = P * m_N$ zur Schätzung von $\Delta TU$ verwendet werden.

Ist das Netzwerk nicht ausreichend bekannt, z.B. hinsichtlich Technologie, Topologie, Protokollen usw., so können alternativ oder zusätzlich statistische Größen zur Abschätzung verwendet werden.

Beispielsweise kann die Uhrengangverzögerung über $\Delta TU = m_N - P*(\overline{\Delta T}_N - m_N)$ abgeschätzt werden (entsprechend für $\Delta TU'$), wobei P auch hierbei Werte zwischen 0 und 1 annehmen kann sowie insbesondere auch $P = 1$ gegeben sein kann. $\overline{\Delta T}_N$ stellt hierbei ein gewichtetes oder ungewichtetes Mittel der $\Delta T_i$ dar, d.h. beispielsweise ein arithmetisches Mittel mit $\overline{\Delta T}_N =$

$$1/N \sum_{i=1}^{N} \Delta T_i.$$ Anhand von Fig. 3 wird verdeutlicht, dass $(\overline{\Delta T}_N - m_N)$ bei näherungsweise konstanter Uhrengangverzögerung $\Delta T_{U,i}$ ein Maß für die mittlere Schwankung der Transferdauer $\Delta T_{D,i}$ darstellt. Durch Subtraktion dieser Größe von $m_N$ kann somit ein Schätzwert für die Uhrengangverzögerung gewonnen werden.

Als weitere Schätzgröße von $\Delta TU$ bzw. $\Delta TU'$ kann beispielsweise $m_N - P*(M_N - m_N)/2$ dienen, d.h. z.B. $\Delta TU = m_N - P*(M_N - m_N)/2$ bzw. $\Delta TU' = m_N' - P'*(M_N' - m_N')/2$, wobei $M_N$ bzw. $M_N'$ ein Maximum der $\Delta T_i$ bzw. $\Delta T_i'$ darstellt, d.h. $M_N = \max\{\Delta T_i \mid i = 1,...,N\}$ bzw. $M_N' = \max\{\Delta T_i' \mid i = 1,...,N\}$ (N ist hierbei lediglich als abstrakte Anzahl zu verstehen, welche sich von Datensender zu Datensender unterscheiden kann; der Einfachheit halber wird hier nicht zwischen N und N' unterschieden). Hierbei wird die Uhrengangverzögerung somit aus dem Mittelwert aus der minimalen und der maximalen zeitlichen Verzögerung $\Delta T_i$ bzw. $\Delta T_i'$ abgeschätzt. Ebenso wie das gewichtete oder ungewichtete Mittel ist auch dies eine sich dynamisch entwickelnde Größe, welche sich über eine Folge von Datenobjekten 3 verändern kann.

Prinzipiell ist eine Kombination der oben erläuterten Schätzungen und ähnlicher Größen möglich, indem beispielsweise mehrere Größen herangezogen werden und miteinander verglichen und/oder kombiniert werden, um ein möglichst genau Abschätzung der Uhrengangverzögerung zu erhalten. Beispielsweise kann ein Minimum unterschiedlicher Schätzungen als bester Wert für die geschätzte Uhrengangverzögerung $\Delta TU$ herangezogen werden.

Die obigen Verfahren eignen sich besonders dann, wenn die Uhrengangverzögerung näherungsweise konstant ist, d.h. die Uhren der Datensender lediglich zeitversetzt jedoch mit gleicher Frequenz bzw. gleicher Taktung laufen. Sobald sich die Uhrengangverzögerung $\Delta TU$ bzw. $\Delta TU'$ merklich ändert, kann es hilfreich sein, lediglich eine Anzahl k der zuletzt empfangenen Datenobjekte 3 N bis N - k - 1 und/oder lediglich Datenobjekte 3 in einem bestimmten Zeitfenster in Abhängigkeit von einer vorgegebenen Zeitgenauigkeit zur Abschätzung von $\Delta TU$ zu berücksichtigen (Sliding Window). Ein Indiz für eine Änderung der Uhrengangverzögerung kann beispielsweise eine deutliche Änderung in dem Wert von $\overline{\Delta T}_N$, $m_N$ und/oder $M_N$ bzw. ihrer gestrichenen Pendants $\overline{\Delta T}_N'$, $m_N'$ und/oder $M_N'$ sein. In diesem Fall können lediglich Daten erfasst und berechnet werden, die innerhalb eines gegebenen Zeitfensters empfangen werden. Hierbei kann der Beginn des Zeitfensters so gewählt werden, dass eine ausreichende Datenmenge, jedoch nicht mehr als notwendig berücksichtigt wird. Beispielsweise kann das Zeitfenster zu $\Delta t = \varepsilon/2a$ festgelegt werden, wobei $\varepsilon$ die geforderte Zeitgenauigkeit und a die zeitliche Änderung der entsprechenden Größe darstellt, z.B. von $\overline{\Delta T}_N$. Der Faktor 1/2 stellt hierbei sicher, dass das Sliding Window wirklich signifikant kleiner als die Abweichung der vor- oder nachgehenden Uhr ist. In dem konkreten Beispiel von Fig. 3 können die ersten Datenobjekte 1 bis 4 beispielsweise von einem Anlaufprozess einer Maschine stammen. Erst wenn die Maschinen in einem stabilen Ausführungsmodus gelangt ist (z.B. ab Datenobjekt 5), kann die Synchronisation der Uhren durchgeführt werden. Hierzu können beispielsweise die Folge der Datenobjekte erst nachdem Anlaufprozess berücksichtigt oder zumindest voll berücksichtigt werden (z.B. über entsprechende Gewichte in der Berechnung von $\Delta TU$).

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

## Patentansprüche

1. Verfahren (M) zur zeitlichen Synchronisation von Datensendern (1) gegenüber einem Datenempfänger (2) in einem Datennetzwerk (10), mit:

    Senden (M1) einer Folge von Datenobjekten (3) i = 1 bis N mit N > 1 mit einem Datensender (1), wobei für jedes Datenobjekt (3) ein lokaler Senderzeitstempel $T_{S,i}$ des Datensenders (1) zum Zeitpunkt des Sendens vergeben wird;
    Empfangen (M2) der Folge von Datenobjekten (3) mit einem Datenempfänger (2), wobei für jedes Datenobjekt (3) ein lokaler Empfängerzeitstempel $T_{E,i}$ des Datenempfängers (2) zum Zeitpunkt des Empfangens vergeben wird;
    Bestimmen (M3) eines Minimums $m_N$ einer zeitlichen Verzögerung $\Delta T_i = T_{E,i} - T_{S,i}$ zwischen dem Datensender (1) und dem Datenempfänger (2) über die Folge von Datenobjekten (3) ;
    Zuweisen (M4) eines korrigierten Zeitstempels $T_{SK,i} = T_{S,i} + \Delta TU$ zu dem zuletzt empfangenen Datenobjekt (3), wobei $\Delta TU$ eine geschätzte Uhrengangverzögerung des Datensenders (1) relativ zu dem Datenempfänger (2) ist, wobei $\Delta TU$ aus der Folge von Datenobjekten (3) mit $\Delta TU < m_N$ geschätzt wird.

2. Verfahren (M) nach Anspruch 1, wobei $m_N - T_D$ zur Schätzung von $\Delta TU$ verwendet wird, wobei $T_D$ eine geschätzte minimale Transferdauer der Datenobjekte (3) von dem Datensender (1) zu dem Datenempfänger (2) ist.

3. Verfahren (M) nach Anspruch 2, wobei $T_D = (h + 1) * T_h$ ist, wobei $T_h$ eine geschätzte minimale Transferdauer der Datenobjekte (3) zwischen zwei Netzknoten des Datennetzwerks (10) und h eine Anzahl der von den Datenobjekten (3) von dem Datensender (1) zu dem Datenempfänger (2) durchlaufenen Netzknoten ist.

4. Verfahren (M) nach einem der Ansprüche 1 bis 3, wobei $P*m_N$ zur Schätzung von $\Delta TU$ verwendet wird, wobei P ein geschätzter prozentualer Anteil der Transferdauer mit $0 < P \leq 1$ ist.

5. Verfahren (M) nach einem der Ansprüche 1 bis 4, wobei $m_N - P*(\overline{\Delta T}_N - m_N)$ zur Schätzung von $\Delta TU$ verwendet wird, wobei $\overline{\Delta T}_N$ ein arithmetisches Mittel der $\Delta T_i$ ist.

6. Verfahren (M) nach Anspruch 5, wobei $\overline{\Delta T}_N$ ein gewichtetes arithmetisches Mittel der $\Delta T_i$ ist.

7. Verfahren (M) nach einem der Ansprüche 1 bis 6, wobei $m_N - P*(M_N - m_N)/2$ zur Schätzung von $\Delta TU$ verwendet wird, wobei $M_N$ ein Maximum der $\Delta T_i$ ist.

8. Verfahren (M) nach einem der Ansprüche 1 bis 7, wobei lediglich eine Anzahl k der zuletzt empfangenen Datenobjekte (3) N bis N - k - 1 zur Abschätzung von $\Delta TU$ verwendet wird.

9. Verfahren (M) nach Anspruch 8, wobei lediglich Datenobjekte (3) in einem bestimmten Zeitfenster in Abhängigkeit von einer vorgegebenen Zeitgenauigkeit berücksichtigt werden.

10. Verfahren (M) nach einem der Ansprüche 1 bis 9, wobei der Datenempfänger (2) korrigierte Zeitstempel $T_{SK,i}$ für eine Mehrzahl von Datensendern (1, 1') auf Basis von entsprechenden geschätzten Uhrengangverzögerungen $\Delta TU$ erstellt.

11. Datennetzwerk (10) mit Datensendern (1, 1'), die in Datenverbindung mit einem Datenempfänger (2) stehen, wobei der Datenempfänger (2) dazu ausgebildet ist, die Datensender (1, 1') mit einem Verfahren (M) nach einem der Ansprüche 1 bis 10 zeitlich gegenüber dem Datenempfänger (2) zu synchronisieren.

# FIG 1

$$\Delta T_i = T_{E,i} - T_{S,i}$$

$$m_N = \min \{ \Delta T_i \mid i = 1, ..., N \}$$

$$\Delta TU < m_N$$

$$T_{SK,i} = T_{S,i} + \Delta TU$$

$$\Delta T_i' = T_{E,i}' - T_{S,i}'$$

$$m_N' = \min \{ \Delta T_i' \mid i = 1, ..., N \}$$

$$\Delta TU' < m_N'$$

$$T_{SK,i}' = T_{S,i}' + \Delta TU'$$

FIG 2

M

M1    M2    M3    M4

FIG 3

$\Delta T_i$

$\Delta T_{D,i}$

$\Delta T_{U,i}$

1  2  3  4  5  6  7  8  9  10    i

Europäisches
Patentamt

European
Patent Office

Office européen
des brevets

## EUROPÄISCHER RECHERCHENBERICHT

Nummer der Anmeldung

EP 18 15 1407

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | ENGLISH ANDREW ET AL: "TriggerSync: A time synchronisation tool", 2015 IEEE INTERNATIONAL CONFERENCE ON ROBOTICS AND AUTOMATION (ICRA), IEEE, 26. Mai 2015 (2015-05-26), Seiten 6220-6226, XP033169286, DOI: 10.1109/ICRA.2015.7140072 [gefunden am 2015-06-29] * Abbildungen 2, 4 * * Seite 6221, rechte Spalte, letzter Absatz - Seite 6222, rechte Spalte, Absatz 1 * * Seite 6224, linke Spalte, Absatz 1 * * Seite 6223, rechte Spalte, Absatz 6 - Absatz 7 * ----- | 1,10,11 | INV. H04J3/06 H04Q9/00 G01D21/00 G06F11/34 ADD. G06F1/14 |
| A | MOON S B ET AL: "Estimation and removal of clock skew from network delay measurements", INFOCOM '99. EIGHTEENTH ANNUAL JOINT CONFERENCE OF THE IEEE COMPUTER A ND COMMUNICATIONS SOCIETIES. PROCEEDINGS. IEEE NEW YORK, NY, USA 21-25 MARCH 1999, PISCATAWAY, NJ, USA,IEEE, US, Bd. 1, 21. März 1999 (1999-03-21), Seiten 227-234, XP010323728, ISBN: 978-0-7803-5417-3 * Zusammenfassung; Abbildungen 2,3 * * Seite 227, rechte Spalte, letzter Absatz - Seite 228, linke Spalte, Absatz 1 * * Seite 229, linke Spalte, Absatz 5 * ----- | 1,11 | |
| A | DE 10 2012 222885 A1 (BAYERISCHE MOTOREN WERKE AG [DE]) 12. Juni 2014 (2014-06-12) * Absätze [0021], [0041], [0049] * * Zusammenfassung * ----- -/-- | 1,10,11 | |

| RECHERCHIERTE SACHGEBIETE (IPC) |
|---|
| H04J H04Q H04W G06F G01D |

Der vorliegende Recherchenbericht wurde für alle Patentansprüche erstellt

| Recherchenort | Abschlußdatum der Recherche | Prüfer |
|---|---|---|
| Den Haag | 20. Juni 2018 | Pieper, Thomas |

EPO FORM 1503 03.82 (P04C03)

Seite 1 von 2

Europäisches
Patentamt

European
Patent Office

Office européen
des brevets

# EUROPÄISCHER RECHERCHENBERICHT

Nummer der Anmeldung

EP 18 15 1407

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| A | MICHAEL KEVIN MAGGS ET AL: "Consensus Clock Synchronization for Wireless Sensor Networks", IEEE SENSORS JOURNAL, IEEE SERVICE CENTER, NEW YORK, NY, US, Bd. 12, Nr. 6, 1. Juni 2012 (2012-06-01), Seiten 2269-2277, XP011442619, ISSN: 1530-437X, DOI: 10.1109/JSEN.2011.2182045 * Seite 2270, linke Spalte, Absatz 6 * ----- | 1,11 | |
| A | US 8 719 452 B1 (DING ZHONGLI [US] ET AL) 6. Mai 2014 (2014-05-06) * Spalte 2, Zeile 5 - Zeile 28 * * Spalte 4, Zeile 28 - Zeile 63 * * Spalte 5, Zeile 56 - Zeile 63 * ----- | 1,10,11 | |

RECHERCHIERTE
SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 20. Juni 2018 | Pieper, Thomas |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

...............................................................
& : Mitglied der gleichen Patentfamilie, übereinstimmendes
  Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 15 1407

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-06-2018

| Im Recherchenbericht angeführtes Patentdokument | Datum der Veröffentlichung | Mitglied(er) der Patentfamilie | Datum der Veröffentlichung |
|---|---|---|---|
| DE 102012222885 A1 | 12-06-2014 | DE 102012222885 A1<br>EP 2932634 A1<br>US 2015281038 A1<br>WO 2014090657 A1 | 12-06-2014<br>21-10-2015<br>01-10-2015<br>19-06-2014 |
| US 8719452 B1 | 06-05-2014 | KEINE | |

Für nähere Einzelheiten zu diesem Anhang : siehe Amtsblatt des Europäischen Patentamts, Nr.12/82

EPO FORM P0461